# FASCICULE DE BREVET EUROPEEN

(11) **EP 4 499 338 B1**
(45) Date de publication et mention de la délivrance du brevet: **08.04.2026**
(21) Numéro de dépôt: 23710909.5
(22) Date de dépôt: 15.03.2023
(51) Int. Cl.: B23K 1/00, B23K 1/008, F28D 9/00, F28F 3/02, F28F 21/08, F28F 27/00, G01K 1/08, B23K 1/19, B23K 101/14, B23K 103/04, B23K 103/10

(54) **PROCEDE DE FABRICATION D'UN ECHANGEUR DE CHALEUR PAR BRASAGE D'UNE SONDE DE TEMPERATURE, ECHANGEUR DE CHALEUR CORRESPONDANT**
VERFAHREN ZUR HERSTELLUNG EINES WÄRMETAUSCHERS DURCH LÖTEN EINER TEMPERATURFÜHLERSONDE, ENTSPRECHENDER WÄRMETAUSCHER
METHOD FOR MANUFACTURING A HEAT EXCHANGER BY BRAZING A TEMPERATURE PROBE, CORRESPONDING HEAT EXCHANGER

(30) Priorité: 24.03.2022 FR 2202611
(43) Date de publication de la demande: 05.02.2025
(73) Titulaire: Alfa Laval Golbey SAS, 88190 Golbey (FR)
(72) Inventeur: BERGIN, Gaëtan, 88190 GOLBEY (FR); MAZET, Thierry, 88190 GOLBEY (FR)
(74) Mandataire: IP Trust
(86) Numéro de dépôt international: PCT/EP2023/056650
(87) Numéro de publication internationale: WO 2023/180146

(56) Documents cités:
- FR-A1- 3 110 098
- KR-A- 20120 039 093
- US-A1- 2011 013 669
- US-B1- 7 080 941

## Description

### DOMAINE TECHNIQUE DE L'INVENTION

L'invention appartient au domaine technique de l'instrumentation d'équipements en aluminium, comme par exemple, les échangeurs de chaleur destinés à la séparation des gaz de l'air et/ou à la distillation des hydrocarbures, assemblés lors d'une opération de brasage.

Plus particulièrement, l'invention concerne un procédé de fabrication d'un échangeur de chaleur permettant d'assembler de façon permanente un capteur de température au cœur de la structure d'un échangeur de chaleur, par exemple en aluminium. L'invention concerne également un échangeur de chaleur.

### ÉTAT DE LA TECHNIQUE

Il existe dans l'état de la technique des publications faisant état de la nécessité d'instrumenter des équipements du type mentionné ci-dessus, de façon à pouvoir en déduire leur état d'endommagement lorsque ceux-ci sont soumis à des chargements thermiques. Cependant, rares sont les publications qui traitent de la façon de les instrumenter, notamment lorsqu'il s'agit de disposer de données thermiques représentatives de la température des tôles qui séparent les fluides.

L'utilisation d'une fibre optique à intégrer à l'intérieur de la structure de l'équipement est mentionnée par la littérature, mais son utilisation nécessite de modifier la structure de l'appareil en ajoutant une couche non active, dans laquelle est placée la fibre. Les températures mesurées, utilisées ensuite pour estimer la durée de vie de l'appareil sont peu fiables, car elles ne sont qu'une approximation de la température réelle à laquelle se trouve la structure de l'appareil mesurée.

On connaît aussi le document FR3110099A1, dont la solution proposée consiste à pratiquer sur une tôle des rainures, dans lesquels seront ultérieurement placées les sondes de température (thermocouples). La tôle, couverte ou non de brasure, est ensuite recouverte par une seconde tôle. L'ensemble est ensuite utilisé dans la structure comme une tôle unique séparant les fluides.

Des cales sont en outre préalablement introduites dans les rainures et retirées à l'issue du brasage afin de pouvoir y introduire les sondes de température.

Dans une variante décrite dans FR3110098 A1 (décrivant le préambule des revendications 1 et 9), les sondes de température sont introduites dans les rainures avant brasage et le brasage de la structure est réalisé avec les sondes de température déjà positionnées dans les rainures. La fusion de la brasure, consécutive à la fabrication de l'équipement, permet de joindre les deux tôles et d'assembler de façon permanente les sondes de température à la structure et de combler les rainures dans lesquelles lesdites sondes ont été insérées. Si les deux solutions permettent de mesurer la température des tôles séparatrices, elles restent onéreuses et difficiles à mettre en œuvre, compte tenu de la dimension des tôles dans lesquelles doivent être réalisées les rainures. Elles entraînent inévitablement un épaississement notable de la tôle séparatrice où sont implantées les sondes de température.

La réalisation de rainures sur des produits plats de faible épaisseur (de l'ordre du mm) et de grandes dimensions (de l'ordre du mètre) pose de sérieux problèmes d'usinage. En effet, rares sont les machines d'usinage qui permettent de réaliser ce type d'opération. D'autres difficultés demeurent concernant la fixation des sondes de température à la structure de l'appareil. Par exemple, l'introduction d'un thermocouple d'une section équivalente ou inférieure au millimètre dans une cavité d'un diamètre légèrement supérieur (comme dans FR3110099A1), sur une distance qui peut atteindre ou excéder le mètre, est compliquée.

De plus, pour la solution où le thermocouple est pris en sandwich entre deux tôles qui seront par la suite assemblées l'une à l'autre par brasage avec le reste de la structure, Il existe un risque quant à l'intégrité de la sonde. En effet, les épaisseurs de gaine qui encapsulent la soudure chaude d'un thermocouple sont insuffisantes, typiquement environ 10 % de la valeur du diamètre, pour éviter d'être totalement dissoute par la brasure liquide. Cette conception ne permet donc pas de garantir la justesse de la mesure de température, voir l'acquisition d'une mesure, si les éléments thermosensibles du capteur sont également dissous.

L'invention vise à remédier aux inconvénients mentionnés précédemment en proposant une méthode de fabrication d'un échangeur de chaleur instrumenté pour mesurer la température, sans modifier l'architecture de la structure et sans altérer les caractéristiques du capteur de température.

### RÉSUMÉ DE L'INVENTION

À cet effet, l'invention propose un procédé de fabrication d'un échangeur de chaleur tel que défini dans la revendication 1, et comprenant une étape d'assemblage par brasage d'une sonde de température à un élément de l'échangeur, ladite sonde de température comprenant une gaine, le procédé comprend en outre une étape préalable à l'étape d'assemblage, dans laquelle on dépose un revêtement mince protecteur sur ladite gaine, ledit revêtement étant résistant à dissolution lors du brasage par un alliage utilisé comme métal d'apport.

Le procédé de fabrication selon l'invention comprend une étape qui consiste à protéger la gaine de la sonde de température (qui peut être un thermocouple), par le dépôt d'un revêtement protecteur avant l'étape de brasage.

Le traitement de surface par dépôt d'une couche mince protectrice permet de limiter les interactions entre la brasure liquide et la gaine de la sonde. Les interactions pouvant être, par exemple, une réaction chimique entre les matériaux formant la gaine et l'alliage d'apport.

Le procédé selon l'invention permet ainsi d'assembler de façon permanente un capteur de température dans un échangeur de chaleur (par exemple en aluminium) sans modifier son architecture et sans altérer le fonctionnement du capteur.

Par exemple, contrairement aux méthodes connues décrites précédemment, il n'est pas nécessaire de réaliser une rainure pour placer la sonde.

Ainsi, il est possible de préserver l'intégrité de la sonde de température lors du brasage de la structure sans entraîner un épaississement notable de la tôle séparatrice pour implanter la sonde de température.

La solution proposée est donc peu onéreuse et facile à mettre en œuvre, faiblement intrusive, tout en garantissant une bonne qualité de mesure *in situ* et pérenne.

Selon des exemples de réalisation, l'échangeur de chaleur est un échangeur à plaques et ondes brasées, dans lequel la sonde de température est assemblée par brasage à une plaque séparatrice de fluides.

Avantageusement, le revêtement peut être formé par une des méthodes PVD, CVD, ou électrodéposition.

L'avantage de ces méthodes de fabrication de couches minces est qu'elles sont faciles à mettre en œuvre à une échelle industrielle.

Avantageusement, le revêtement mince peut présenter une épaisseur comprise entre 5 µm et 50 µm. Cette épaisseur est suffisante pour protéger la gaine sans empêcher le brasage.

Avantageusement, le revêtement mince peut comprendre un matériau métallique non réactif avec l'alliage utilisé comme métal d'apport pour le brasage. Ceci réduit ou empêche la réactivité avec l'alliage d'apport et assure une protection de la gaine.

Selon des exemples de réalisation, le revêtement peut comprendre une superposition de deux couches de matériaux différents.

Le matériau de revêtement peut être, par exemple, le titane ou/et l'argent. Il peut être déposé en monocouche ou en deux couches distinctes, comprenant par exemple un premier revêtement d'argent, par exemple de 3 à 15 µm et un second revêtement de titane, par exemple d'épaisseur comprise entre 10 et 35 µm.

L'invention porte selon un deuxième aspect sur un échangeur de chaleur obtenu par le procédé selon la description ci-dessus, voir la revendication 9.

### BRÈVE DESCRIPTION DES FIGURES

D'autres caractéristiques et avantages de l'invention apparaîtront au cours de la lecture de la description détaillée qui va suivre pour la compréhension de laquelle on se reportera aux dessins annexés dans lesquels :
[Fig 1] la figure 1 est une représentation d'un exemple de matrice d'un échangeur de chaleur en cours d'empilage.
[Fig 2] la figure 2 montre une partie de la matrice comprenant une sonde de température.
[Fig 3] la figure 3 est une représentation schématique en coupe verticale illustrant la fixation par brasage de la sonde.

### DESCRIPTION DÉTAILLÉE DE L'INVENTION

Dans la description ci-dessous, nous décrivons des exemples de réalisation dans lesquels l'échangeur de chaleur obtenu est un échangeur à plaques et ondes brasées. L'invention s'applique néanmoins à d'autres types d'échangeur pouvant être instrumentés par l'ajout d'une ou plusieurs sondes de température fixées par brasage.

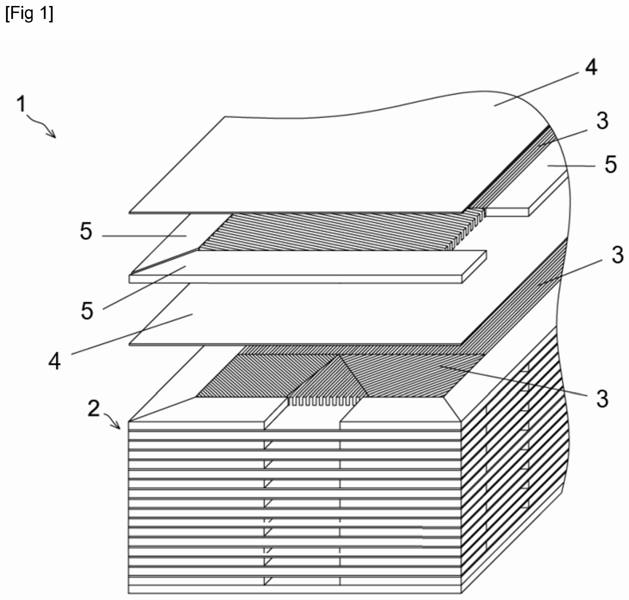

Sur la figure 1 est représentée en perspective et en vue éclatée une matrice 2 d'un échangeur de chaleur 1 à plaques et ondes brasées. La matrice 2 est représentée en cours d'empilage. Elle est par exemple en aluminium, mais peut également, selon des variantes, comprendre d'autres métaux, tel que l'acier.

De façon connue, la matrice 2 comprend une pile de composants, comprenant notamment des ondes 3, des plaques (appelées aussi tôles) 4 de séparation de fluides et des barres 5 en aluminium entourant les ondes 3.

L'échangeur de chaleur 1 peut être instrumenté par l'ajout d'une ou plusieurs sonde(s) de température afin de suivre les variations de température à l'intérieur.

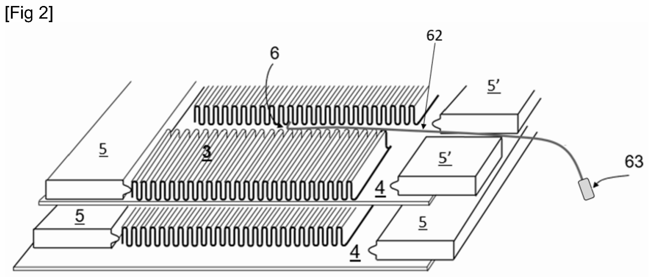

La figure 2 représente un exemple de réalisation de l'invention dans lequel une sonde de température 6 est fixée à une plaque 4 de séparation. Selon l'exemple illustré, la sonde est positionnée entre deux plaques d'ondes 3. En outre la barre est coupée en deux parties 5' pour permettre le passage de la sonde.

La sonde 6 permet ainsi de mesurer la température de la tôle de séparation 4.

Dans d'autres exemples de réalisation non illustrés, la découpe des barres n'est pas nécessaire.

Selon des exemples de réalisation, une ou plusieurs sondes (par exemple des thermocouples) pouvant avoir un diamètre compris entre 0,25 et 1 mm peuvent être utilisées. Les sondes peuvent être directement placées à la surface de la tôle séparatrice sans perturber l'écoulement des fluides et assemblées à la surface lors du brasage de l'équipement.

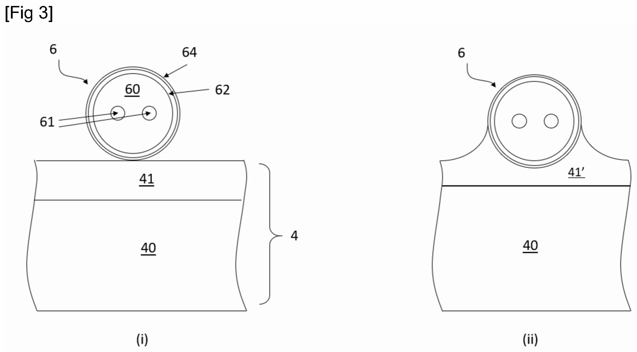

La figure 3 montre une sonde de température 6 avant (i) et après (ii) son assemblage par brasage avec une plaque de séparation 4. Conformément à l'invention, la plaque de séparation 4 comprend une âme 40 sur laquelle est déposée une brasure 41 (comprenant un alliage d'apport pour l'opération de brasage, par exemple à base d'aluminium).

Conformément à l'invention, la sonde de température 6 est placée sur la plaque 4 avant le brasage. Cette sonde de température en tant que telle est connue, elle comprend un matériau isolant 60 entourant un élément thermosensible 61 et l'ensemble est recouvert par une gaine 62 de protection. Elle comprend aussi un connecteur 63 comme montré en figure 2.

Pour assembler la sonde 6 sur la plaque 4, celle-ci est mise dans un four de brasage après retrait du connecteur 63, ce dernier ne sera mis en place qu'après brasage.

Optionnellement, avant le brasage, l'extrémité de la gaine correspondant à la soudure froide peut être étanchéifiée par soudage laser. Par ailleurs, si la sonde est trop longue, la partie restant à l'extérieur de la plaque peut être enroulée et fixée mécaniquement à l'équipement avant le brasage.

Le four est porté à la température de brasage, ce qui induit la fusion de la brasure 41'. Celle-ci vient alors entourer en partie ou en totalité la sonde et la fixer à la plaque 4.

Il est bien connu de l'homme de l'art que les sondes de température (thermocouples) sont communément élaborées dans un matériau difficile à assembler par brasage si l'agent de brasage utilisé est un alliage d'aluminium à bas point de fusion, par exemple celui utilisé pour la fabrication des échangeurs de chaleur en aluminium.

L'aluminium est très réactif vis-à-vis du fer, du nickel, du chrome, et est à l'origine d'une réaction exothermique lorsqu'à l'état liquide il entre au contact avec ceux-ci. Cette réactivité est suffisante pour altérer la gaine du thermocouple, généralement en Inconel (Alliage à base de Ni-Cr-Fe) et altérer la mesure si les quantités de liquide fournies lors de la fusion de la brasure sont suffisantes pour venir dissoudre la totalité de la sonde.

Pour protéger la gaine lors du brasage, le procédé selon l'invention comprend une étape de traitement de surface de la sonde avant l'étape de brasage.

Le traitement de surface comprend le dépôt d'un revêtement mince sur la gaine pour éviter sa dissolution par un alliage utilisé comme métal d'apport pour le brasage. Le revêtement mince permet de limiter les interactions entre la brasure liquide et la gaine de la sonde sans empêcher la fixation de celle-ci sur la plaque.

Le revêtement peut être formé par une des méthodes PVD, CVD ou électrodéposition ou par tout autre moyen permettant de réaliser un dépôt mince d'une couche métallique apte à limiter la dissolution de la gaine tout en maintenant les capacités à être assemblée à l'aide d'un alliage d'apport.

Le revêtement mince peut comprendre un matériau métallique non réactif avec l'alliage utilisé comme métal d'apport pour le brasage.

Avantageusement, le revêtement 64 mince peut présenter une épaisseur comprise entre 5 µm et 50 µm. Le matériau de revêtement peut être, par exemple, le titane ou/et l'argent. Il peut être déposé en monocouche ou en deux couches distinctes, comprenant par exemple un premier revêtement d'argent, par exemple de 3 à 15 µm et un second revêtement de titane, par exemple d'épaisseur comprise entre 10 et 35 µm.

## Revendications

1. Procédé de fabrication d'un échangeur de chaleur (1) comprenant une étape d'assemblage par brasage d'une sonde (6) de température à un élément de l'échangeur (4), ladite sonde (6) de température comprenant une gaine (62), le procédé est **caractérisé en ce qu'**il comprend en outre une étape préalable à l'étape d'assemblage, dans laquelle on dépose un revêtement mince (64) protecteur sur ladite gaine (62), ledit revêtement étant résistant à une dissolution lors du brasage par un alliage utilisé comme métal d'apport de brasure,
ledit élément de l'échangeur de chaleur (4) étant une plaque de séparation (4) comprenant une âme (40) sur laquelle est déposée une brasure (41),
la sonde de température (6) étant placée sur la plaque (4) avant le brasage.

2. Procédé de fabrication d'un échangeur de chaleur selon la revendication 1, dans lequel l'échangeur de chaleur (1) est un échangeur à plaques et ondes brasées et dans lequel la sonde (6) de température est assemblée par brasage à la plaque (4) séparatrice de fluides.

3. Procédé de fabrication d'un échangeur de chaleur selon l'une des revendications précédentes, dans lequel le revêtement (64) mince est formé par une des méthodes PVD, CVD ou électrodéposition.

4. Procédé selon l'une des revendications précédentes dans lequel le revêtement (64) mince présente une épaisseur comprise entre 5 µm et 50 µm.

5. Procédé selon l'une des revendications précédentes dans lequel le revêtement (64) mince comprend un matériau métallique non réactif avec l'alliage utilisé comme métal d'apport pour le brasage.

6. Procédé selon la revendication précédente dans lequel le revêtement mince comprend du titane et/ou l'argent.

7. Procédé selon l'une des revendications précédentes, dans lequel le revêtement (64) mince comprend une superposition de deux couches de matériaux différents.

8. Procédé selon la revendication précédente, dans lequel le revêtement comprend une couche d'argent et une couche de titane.

9. Échangeur de chaleur (1) obtenu par le procédé selon l'une des revendications précédentes, l'échangeur de chaleur comprenant un élément (4) **caractérisé en ce que** : l'élément est une plaque de séparation (4) comprenant une âme (40) sur laquelle est déposée par brasage une sonde de température (6) comprenant une gaine (62) et un revêtement mince (64) protecteur déposé sur ladite gaine (62).

## Patentansprüche

1. Verfahren zur Herstellung eines Wärmetauschers (1), das einen Schritt zum Verbinden einer Temperatursonde (6) mit einem Element des Wärmetauschers (4) durch Löten umfasst, wobei die Temperatursonde (6) eine Hülle (62) umfasst, wobei das Verfahren **dadurch gekennzeichnet ist, dass** es weiter einen dem Verbindungsschritt vorausgehenden Schritt umfasst, in dem eine dünne Schutzbeschichtung (64) auf die Hülle (62) aufgebracht wird, wobei die Beschichtung beim Löten mit einer als Lötzusatzmetall verwendeten Legierung lösungsbeständig ist,
wobei das Element des Wärmetauschers (4) eine Trennplatte (4) ist, die einen Kern (40) umfasst, auf den ein Lot (41) aufgebracht ist,
wobei die Temperatursonde (6) vor dem Löten auf der Platte (4) angebracht wird.

2. Verfahren zur Herstellung eines Wärmetauschers nach Anspruch 1, wobei der Wärmetauscher (1) ein Plattenwärmetauscher mit gelöteten Wellen ist und wobei die Temperatursonde (6) durch Löten mit der Fluid-Trennplatte (4) verbunden ist.

3. Verfahren zur Herstellung eines Wärmetauschers nach einem der vorstehenden Ansprüche, wobei die dünne Beschichtung (64) durch eines von einem PVD-Verfahren, einem CVD-Verfahren oder Galvanisierung gebildet wird.

4. Verfahren nach einem der vorstehenden Ansprüche, wobei die dünne Beschichtung (64) eine Dicke zwischen 5 µm und 50 µm aufweist.

5. Verfahren nach einem der vorstehenden Ansprüche, wobei die dünne Beschichtung (64) ein metallisches Material umfasst, das mit der als Zusatzwerkstoff zum Löten verwendeten Legierung nicht reagiert.

6. Verfahren nach dem vorstehenden Anspruch, wobei die dünne Beschichtung Titan und/oder Silber umfasst.

7. Verfahren nach einem der vorstehenden Ansprüche, wobei die dünne Beschichtung (64) eine Überlagerung von zwei Schichten aus unterschiedlichen Materialien umfasst.

8. Verfahren nach einem der vorstehenden Ansprüche, wobei die Beschichtung eine Silberschicht und eine Titanschicht umfasst.

9. Wärmetauscher (1), erhalten durch das Verfahren nach einem der vorstehenden Ansprüche, Wärmetauscher umfassend ein Element (4), **dadurch gekennzeichnet, dass**:
das Element eine Trennplatte (4) ist, die einen Kern (40) umfasst, auf den eine Temperatursonde (6) aufgebracht ist, die eine Hülle (62) und eine dünne Schutzbeschichtung (64) umfasst, die auf die Hülle (62) aufgebracht ist.

## Claims

1. A method for manufacturing a heat exchanger (1) comprising a step of assembling by brazing a temperature probe (6) to an element of the exchanger (4), said temperature probe (6) comprising a sheath (62), the method is **characterised in that** it further comprises a step prior to the assembly step, in which a thin protective coating (64) is deposited on said sheath (62), said coating being resistant to dissolution during brazing with an alloy used as a brazing filler metal,
said element of the heat exchanger (4) being a separation plate (4) comprising a web (40) on which a braze (41) is deposited,
the temperature probe (6) being placed on the plate (4) before brazing.

2. The method for manufacturing a heat exchanger according to claim 1, wherein the heat exchanger (1) is a brazed plate and wave exchanger and wherein the temperature probe (6) is assembled by brazing to the fluid separation plate (4).

3. The method for manufacturing a heat exchanger according to one of the preceding claims, wherein the thin coating (64) is formed by one among the PVD, CVD or electroplating methods.

4. The method according to one of the preceding claims, wherein the thin coating (64) has a thickness between 5 µm and 50 µm.

5. The method according to one of the preceding claims, wherein the thin coating (64) comprises a metal material non-reactive with the alloy used as the brazing filler metal.

6. The method according to the preceding claim, wherein the thin coating comprises titanium and/or silver.

7. The method according to one of the preceding claims, wherein the thin coating (64) comprises a superposition of two layers of different materials.

8. The method according to the preceding claim, wherein the coating comprises a silver layer and a titanium layer.

9. A heat exchanger (1) obtained by the method according to any one of the preceding claims, the heat exchanger comprising an element (4), **characterised in that**:
the element is a separation plate (4) comprising a web (40) on which a temperature probe (6) is brazed, the probe comprising a sheath (62) and a thin protective coating (64) deposited on said sheath (62).
